Europäisches Patentamt

European Patent Office

Office européen des brevets

(11) Veröffentlichungsnummer: **0 005 149**
**A1**

(12) # EUROPÄISCHE PATENTANMELDUNG

(21) Anmeldenummer: **79100541.6**

(22) Anmeldetag: **23.02.79**

(51) Int. Cl.²: **F 16 S 1/00,** B 29 D 9/00,
B 32 B 21/08, B 44 C 5/04

(30) Priorität: **29.04.78 DE 7813178 U**

(43) Veröffentlichungstag der Anmeldung: **14.11.79**
**Patentblatt 79/23**

(84) Benannte Vertragsstaaten: **BE CH DE FR GB IT LU NL**

(71) Anmelder: **RESOPAL WERK H. Römmler Gmbh,**
**Kallstadter Strasse 1, D-6800 Mannheim-Käfertal (DE)**

(72) Erfinder: **Milian, Hans, Meissner-Weg 59, D-6100**
**Darmstadt-Kranichstein (DE)**
Erfinder: **Riedl, Ernst, Blumenweg 15, D-6111**
**Heubach (DE)**

(74) Vertreter: **Kempe, Wolfgang, Dr. et al, c/o Brown,**
**Boveri & Cie AG Postfach 351, D-6800**
**Mannheim 1 (DE)**

(54) **Dekorative nachformbare Schichtpressstoffplatte und ihre Verwendung.**

(57) Bei einer dekorativen, nachformbaren Schichtpreßstoffplatte mit einem Kern (3) und einer Dekorbahn ist
diese aus zwei Teilbahnen (1, 2) zusammengesetzt, die
derart nebeneinander oder übereinandergelegt sind, daß
in mindestens einem Randbereich (7) der Platte jene Teilbahn (1), welche das Aussehen im Nachformbereich bestimmt, sichtbar bleibt.

Mit solchen Schichtpreßstoffplatten lassen sich auf
einfache Weise insbesondere Arbeitsplatten oder Frontplatten für Küchenmöbel herstellen, deren Kanten abgerundet oder profiliert sind und im Nachformbereich ein
Dekor aufweisen, das vom Dekor der Teilbahn (2) abweicht.

RESOPAL WERK  Mannheim, 20. Febr. 1979
H. Römmler GmbH  ZFE/Pl-Dr.sc/Ht
Mp.-Nr. 548/78

BEZEICHNUNG GEÄNDERT
siehe Titelseite

## Dekorative nachformbare Schichtpreßstoffplatte

Die Erfindung bezieht sich auf eine dekorative nachformbare
Schichtpreßstoffplatte mit mehreren mit härtbarem Harz
imprägnierten Gewebe- oder Vliesbahnen, insbesondere Papierbahnen als Kern, sowie mindestens einer Dekorbahn und einer
diese abdeckenden Bahn oder Schicht.

Derartige Schichtpreßstoffplatten sind bereits seit einiger
Zeit in verschiedenen Variationen erhältlich. Vorzugsweise
werden sie auf ein Trägermaterial mit rund oder profiliert
abgefrästen Kanten aufgebracht, z. B. eine Spanplatte, und
weisen je nach der Anzahl der verwendeten Kernpapierbahnen
im allgemeinen eine Stärke zwischen 0,6 und 1,2 mm auf.
In der genannten Stärke lassen sich diese Schichtpreßstoffplatten noch leicht nachverformen und unter Verwendung von
Harnstoffharz oder anderen Leimen dauerhaft mit den Trägerplatten verbinden.

Soll nun der abgerundete bzw. profilierte Kantenbereich derartiger Verbundelemente, insbesondere Arbeitsplatten und Frontplatten für Küchenmöbel, ein von der übrigen Fläche abweichendes Aussehen aufweisen, z. B. das Aussehen eines Vorleimers aus Echtholz, so war man bisher gezwungen, das Dekorpapier mit einem im Nachformbereich andersartigen Aufdruck, also etwa einem Holzmuster, zu bedrucken.

Das zweizonige Bedrucken solcher Bögen macht gewisse Schwierigkeiten und ist auch insofern unbefriedigend, als für jede gewünschte Kombination von Dekoren und Farben bzw. Mustern im Kanten- bzw. Nachformbereich entsprechende Kombinationen eigens gedruckt und vorrätig gehalten werden müssen.

Der Erfindung lag daher die Aufgabe zugrunde, eine Schichtstoffplatte bereitzustellen, für die das kombinierte Bedrucken von Dekorpapieren überflüssig wird und das die Kombination beliebiger, ohnehin vorrätiger Dekorpapiere ohne größeren Aufwand sowohl bezüglich Lagerung als auch Fertigung erlaubt.

Die Lösung dieser Aufgabe ist gemäß der Neuerung dadurch gekennzeichnet, daß die Dekorbahn aus mindestens zwei Teilbahnen mit unterschiedlichem Dekor zusammengesetzt ist die neben- oder teilweise übereinandergelegt sind, derart, daß in mindestens einem Randbereich der Platte oder eines Zuschnittes aus der Platte die das Aussehen des Nachformbereiches bestimmende Teilbahn sichtbar angeordnet ist.

Bei den verwendeten Dekorbahnen kann es sich um die bekannten Qualitäten, vorzugsweise mit Melaminharz getränkt, handeln, wobei sich die Verwendung eines Überpresserbogens auf der Basis melaminharzimprägnierter Edelzellulose empfiehlt.

20. 2. 79 — 3 — 548/78

Im folgenden wird die Neuerung anhand von Ausführungsbeispielen in Verbindung mit schematischen Figuren näher beschrieben, woraus sich weitere Einzelheiten und Vorteile der Erfindung ergeben.

Es zeigen in perspektivischer Darstellung:

Figur 1    eine Schichtpreßstoffplatte gemäß der Erfindung mit teilweise übereinandergelegten Teilbahnen,

Figur 2    eine Schichtstoffplatte mit nebeneinanderliegenden Teilbahnen,

Figur 3    eine Ausführungsvariante des Gegenstandes der Fig. 1,

Figur 4    eine weitere Ausführungsvariante und

Figur 5 und 6 Schichtstoffplatten gemäß der Erfindung mit Randstreifen.

In den folgenden Figuren ist die im Kanten- bzw. Nachformbereich sichtbare Teilbahn mit 1, die das Aussehen des übrigen Bereichs bestimmende Teilbahn mit 2 und die Überpresserbahn mit 4 bezeichnet. Der aus mindestens einer, meist drei bis fünf Bahnen bestehende Kern ist mit 3 beziffert.

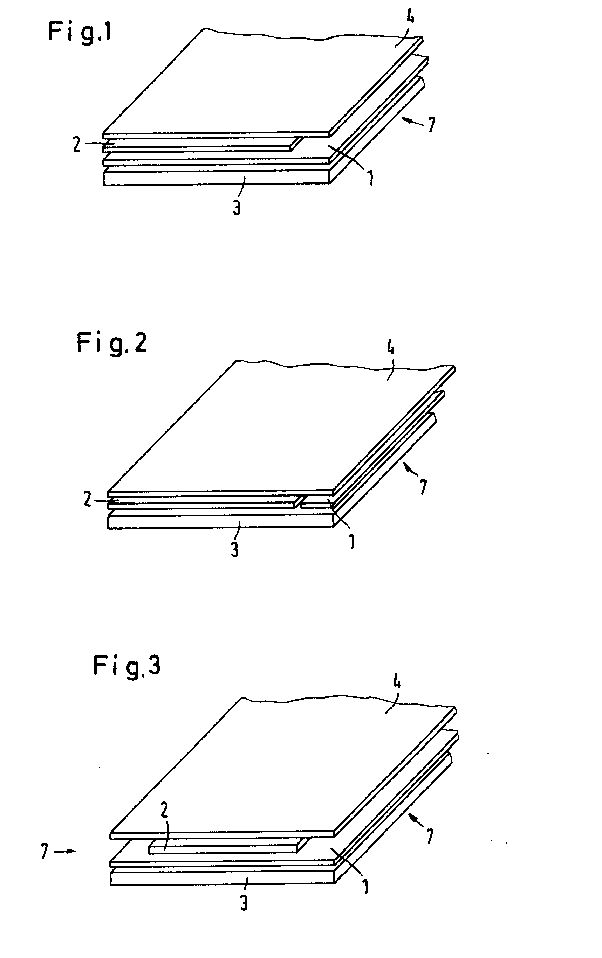

Figur 1 zeigt eine Schichtpreßstoffplatte, bei der zwei mit einem Dekor versehene Teilbahnen 1 und 2 teilweise übereinandergelegt sind derart, daß die das Aussehen des Nachform- bzw. Randbereiches 7 bestimmende Teilbahn 1 im genannten Bereich nicht von der anderen Teilbahn 2 überdeckt ist, sondern frei bleibt. Bei der Herstellung solcher Schichtpreßstoffplatten hat man den Vorteil, daß die beiden Dekorpapierabschnitte an dem dem nachzuformenden Bereich gegenüberliegenden Rand auf Anschlag gelegt werden können und nicht besonders fixiert zu werden brauchen beim Eintafeln.

Bei einer gemäß Figur 2 aufgebauten Schichtpreßstoffplatte hat man den Vorteil, Dekorpapier einzusparen, im allgemeinen ist hier jedoch eine Fixierung der beiden Teilbahnen 1 und 2 durch kleine Klebstellen notwendig, um ein Verrutschen beim Eintafeln zu vermeiden. Ein weiterer Vorteil dieses Aufbaues besteht darin, daß im Gegensatz zu dem in Figur 1 Gezeigten, eine gleichmäßig dicke Schichtpreßstoffplatte entsteht.

In Figur 3 ist eine weitgehend gemäß Figur 1 aufgebaute Schichtpreßstoffplatte gezeigt, mit dem Unterschied, daß hier zwei Randbereiche 7 gemäß der Neuerung ausgebildet sind. Durch Längsteilen derartiger Platten erhält man zwei Zuschnitte, die sich zur Herstellung von zwei einseitig nachgeformten Arbeitsplatten eignen.

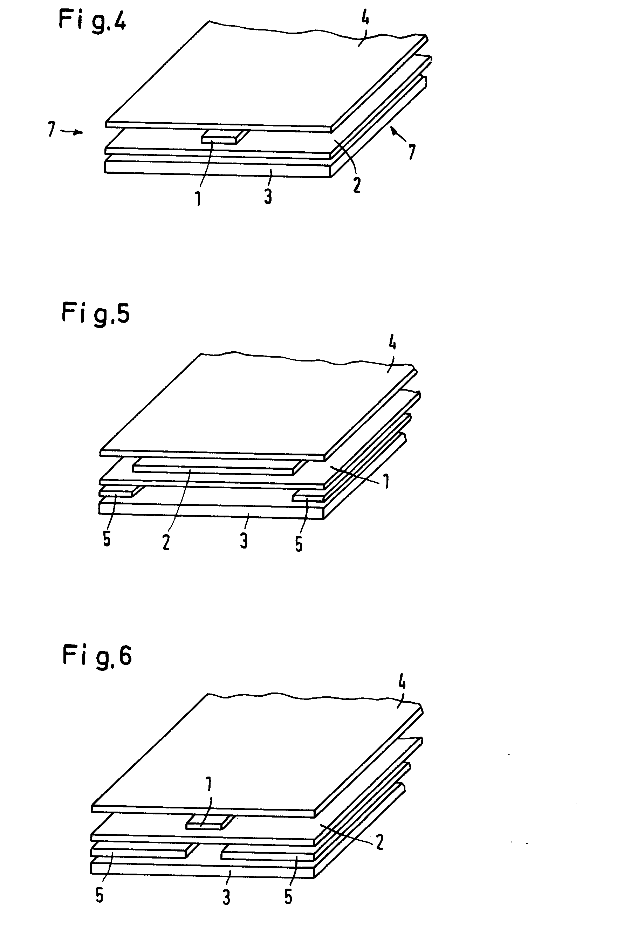

Auch in Figur 4 ist eine gemäß Figur 3 aufgebaute Schichtpreßstoffplatte gezeigt, bei der man ebenfalls durch Längsschnitt zwei Zuschnitte mit Randbereich erhält, mit dem Vorteil, Dekorpapier für die abdeckende Schicht einzusparen. Es ist im Grundsatz natürlich auch möglich, Schichtpreßstoffplatten an mehreren oder sogar allen Rändern gemäß der Neuerung auszubilden, um daraus mehrseitig nachgeformte Arbeits- oder Frontplatten herzustellen.

Am Beispiel von Figur 5 und 6 ist gezeigt, daß der beim Aufbau gemäß Figuren 1, 3 und 4 bestehende Nachteil einer etwas verminderten bzw. vergrößerten Dicke im Randbereich der Elemente und Zuschnitte, der bei gewissen Weiterverarbeitungen stören kann, ausgeglichen werden kann durch Unterlegen entsprechend bemessener Randstreifen aus Kernpapier. Diese Randstreifen sind in den Figuren 5 und 6 mit 5 bezeichnet und zwischen Kern- und Teilbahnen zumindest bereichsweise eingefügt.

Die Herstellung der neuerungsgemäßen Schichtpreßstoffplatten entspricht im übrigen bekannten Verfahren. Im allgemeinen werden die aufeinandergelegten Bahnen bei Drücken von 60 bis 120 kp/cm$^2$ und Temperaturen von 120 bis 160 $^{\circ}$C in Etagenpressen unter Zwischenlegen von hochpolierten Metalltafeln oder Strukturgebern verpreßt.

Ansprüche

1. Dekorative nachformbare Schichtpreßstoffplatte mit mehreren mit härtbarem Harz imprägnierten Gewebe- oder Vliesbahnen, insbesondere Papierbahnen, als Kern (3) sowie mindestens einer Dekorbahn und eine diese abdeckende Bahn (4) oder Schicht, dadurch gekennzeichnet, daß die Dekorbahn aus mindestens zwei Teilbahnen (1,2) mit unterschiedlichem Dekor zusammengesetzt ist die neben- oder teilweise übereinandergelegt sind, derart, daß in mindestens einem Randbereich (7) der Platte oder eines Zuschnittes aus der Platte die das Aussehen des Nachformbereiches bestimmende Teilbahn (1) sichtbar angeordnet ist.

2. Schichtpreßstoffplatte nach Anspruch 1, dadurch gekennzeichnet, daß die Teilbahnen (1,2) teilweise übereinanderliegen und im ausgesparten Bereich ein Randstreifen (5) aus Kernpapier zum Ausgleich der Dicke angeordnet ist.

3. Schichtpreßstoffplatte nach Anspruch 1 oder 2, dadurch gekennzeichnet, daß die Teilbahnen (1,2) Melaminharz enthalten.

4. Schichtpreßstoffplatte nach einem der Ansprüche 1 bis 3, dadurch gekennzeichnet, daß als oberste Schicht auf den Teilbahnen (1,2) eine mit Melaminharz getränkte durchsichtige Bahn (4) aus Edelzellulose aufliegt.

5. Verwendung einer Schichtpreßstoffplatte gemäß einem der Ansprüche 1 bis 4 zur Herstellung von Arbeits- oder Frontplatten, insbesondere für Küchenmöbel, mit abgerundeter, vorzugsweise profilierter Kante.

Fig.1

Fig.2

Fig.3

2/2

Fig.4

Fig.5

Fig.6

# 0005149

Europäisches Patentamt

## EUROPÄISCHER RECHERCHENBERICHT

Nummer der Anmeldung

EP 79 100 541.6

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 2 638 787 (WESTAG & GETALIT AG) <br> * Ansprüche 1, 2; Fig. 1, 2 * <br> -- | 1 | F 16 S 1/00 <br> B 29 D 9/00 <br> B 32 B 21/08 <br> B 44 C 5/04 |
| A | DE - A - 2 056 275 (ISOVOLTA ÖSTERR. ISOLIERSTOFFWERK KG) <br> * ganzes Dokument * <br> -- | | |
| A | DE - U - 1 771 265 (J.F. WERZ JUN.K.G.) <br> * ganzes Dokument * <br> -- | | |
| A | KUNSTSTOFFE, Band 60, 1970, Heft 8, München <br> H.D. MARTIN "Bau-, Licht- und Möbel-platten" <br> Seiten 498 bis 499 <br> * Seite 498, Spalte 2 * <br> ---- | | |

**RECHERCHIERTE SACHGEBIETE (Int. Cl.²)**

B 29 D 9/00
B 32 B 21/08
B 32 B 27/04
B 44 C 3/02
B 44 C 5/04
F 16 S 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 06-07-1979 | v. WITTKEN |

EPA form 1503.1  06.78